# EUROPÄISCHE PATENTSCHRIFT

(11) **EP 1 742 335 B1**
(45) Veröffentlichungstag und Bekanntmachung des Hinweises auf die Patenterteilung: **04.03.2009**
(21) Anmeldenummer: 05014823.8
(22) Anmeldetag: 08.07.2005
(51) Int. Cl.: H02K 15/12, H02K 3/44, H02K 3/32

(54) **Stator und Verfahren zur Herstellung eines Stators eines elektrischen Antriebsmotors**
Stator and method of manufacturing of a stator for an electric motor
Stator et procédé de fabrication d'un stator d'un moteur électrique

(43) Veröffentlichungstag der Anmeldung: 10.01.2007
(73) Patentinhaber: AEG Electric Tools GmbH, 71364 Winnenden (DE)
(72) Erfinder: Hänsel, Markus, Dipl.-Ing., 71723 Grossbottwar (DE)
(74) Vertreter: Riedel, Peter

(56) Entgegenhaltungen:
- EP-A- 1 508 954
- DE-A- 3 528 492
- GB-A- 910 297
- US-A- 5 466 492

## Beschreibung

Die Erfindung betrifft einen Stator eines elektrischen Antriebsmotors einer handgeführten Werkzeugmaschine mit den Merkmalen nach dem Oberbegriff des Anspruchs 1 sowie ein Verfahren zur Herstellung eines solchen Stators.

Handgeführte, durch einen elektrischen Antriebsmotor angetriebene Werkzeugmaschinen wie Bohrmaschinen, Winkelschleifer oder dgl. werden häufig unter Umgebungsbedingungen mit hoher Schmutzbelastung eingesetzt. Beim Bohren und insbesondere beim Schleifen können große Staubmengen entstehen, denen die Werkzeugmaschine ausgesetzt ist.

Elektrische Antriebsmotoren derartiger Werkzeugmaschinen sind in bekannter Bauform mit einem Lüfterrad versehen, welches auf dem Rotor des Antriebsmotors montiert ist. Zwischen dem Rotor und dem Stator und auch zwischen dem Stator und dem darum herumliegenden Gehäuse ist ein Luftspalt vorgesehen, der durch die Drehbewegung des Lüfterrades von einem axialen Kühlluftstrom durchströmt ist. Dieser Kühlluftstrom trägt Staub- und andere Schmutzpartikel mit, die auf die Oberfläche des Stators auftreffen und zu Abrasion führen können.

Das für die Erzeugung der Antriebsleistung des elektrischen Motors erforderliche elektromagnetische Feld wird in vorbekannten Bauformen durch elektrisch leitende Drahtwicklungen erzeugt, die auf einen Kern des Stators in Form eines Blechpaketes gewickelt und von elektrischem Strom durchflossen sind. Die Drahtwicklungen bestehen aus Kupferlackdraht, dessen Lackbeschichtung die einzelnen Windungen gegeneinander isoliert. Die Drahtwicklungen insgesamt sind mit einer Kunststoffüllung überzogen, die beispielsweise auf dem Wege des Wirbelsinterns aufgebracht werden kann. Das Material der Kunststoffüllung verdichtet die Drahtwicklungen zu einer kompakten, starren Baueinheit. Einzelne Drähte der Drahtwicklungen sind gegen Vibrationsschäden, Abrasion und elektrische Überschläge geschützt.

Aus der GB 910 297 A ist ein Stator mit Drahtwicklungen bekannt, die mit einer Kunststoffbeschichtung versehen sind. Zur Herstellung der Beschichtung werden die Wicklungen mit Strom beaufschlagt. Der Stator wird anschließend in ein Tauchbad mit verflüssigtem Kunststoff geführt. Dieser lagert sich an den aufgeheizten Drahtwicklungen an und bildet eine Beschichtung, während der kühlere Stator selbst unbeschichtet bleibt.

Es hat sich gezeigt, daß die vorgenannte Schutzwirkung der Kunststoffüllung unter bestimmten Umständen unzulänglich sein kann. Die Kunststoffüllung haftet nur im unmittelbaren Bereich der Drahtwicklungen, während Teile des Kerns freiliegen. Beispielsweise bei Schleifvorgängen mit sogenannten Fächerscheiben können sich Fasern der Fächerscheiben mit daran haftendem Schleifmittel lösen und vom Kühlluftstrom des Antriebsmotors angesaugt werden. Zur Vermeidung einer Spannungsverschleppung durch ein solches Fasermaterial, welches zum Festhaften am Stator neigt, ist eine aufwendige Führung des Kühlluftstromes erforderlich. Insbesondere darf eine Spaltdicke zwischen Stator und Rotor ein bestimmtes Mindestmaß nicht unterschreiten, damit Ankerstreifen vermieden wird. Der Luftspalt verringert den elektrischen Wirkungsgrad des Antriebsmotors und vergrößert das Bauvolumen des Antriebsmotors bzw. der Werkzeugmaschine insgesamt.

Der Erfindung liegt die Aufgabe zugrunde, einen gattungsgemäßen Stator derart weiterzubilden, daß bei kleinem Bauvolumen eine hohe Betriebssicherheit gegeben ist.

Diese Aufgabe wird durch einen Stator mit den Merkmalen des Anspruchs 1 gelöst.

Der Erfindung liegt des weiteren die Aufgabe zugrunde, ein Verfahren anzugeben, mit dem ein solcher in seiner Betriebssicherheit gesteigerter Stator einfach und zuverlässig herstellbar ist.

Diese Aufgabe wird durch ein Verfahren mit den Merkmalen des Anspruchs 4 gelöst.

Es wird ein Stator vorgeschlagen, der insgesamt, also einschließlich seines Kerns, seiner Drahtwicklungen und der Kunststoffüllung der Drahtwicklungen von einer dünnen, elektrisch isolierenden Tauchschicht insbesondere aus Kunststoff umhüllt ist. Zur Herstellung wird vorgeschlagen, daß zunächst durch die Drahtwicklungen ein elektrischer Strom geleitet und damit die Drahtwicklungen aufgeheizt werden. Die erhitzten Drahtwicklungen des Stators werden mit einem Kunststoffsintermaterial zur Herstellung einer Kunststoffüllung beschichtet. Anschließend erfolgt zweckmäßig eine kurze Ruhephase, in der sich die Wärme der Drahtwicklungen auf die weiteren Bauteile und Komponenten des Stators zumindest näherungsweise gleichmäßig verteilt. Nach der Ruhephase wird der Stator insgesamt in ein Tauchbad mit flüssigem Medium, insbesondere Kunststoffrohmaterial getaucht, wobei sich nach der Entnahme aus dem Tauchbad eine den Stator insgesamt umhüllende Tauchschicht bildet. Nachfolgend wird das Sintermaterial und die entstandene Tauchschicht gehärtet.

Die Erfindung macht sich den Effekt zu Nutze, daß die Wärmeverteilung der elektrisch aufgeheizten Drahtwicklungen zeitlich verzögert erfolgt, während die Aufwärmung der Drahtwicklungen im stromdurchflossenen Zustand vergleichsweise schnell erfolgt.

Die Strombeaufschlagung der Drahtwicklungen erfolgt unmittelbar vor oder sogar im Sinterbad. Das aufgewirbelte, pulverförmige Kunststoffsintermaterial haftet an den erhitzten Drahtwicklungen und backt dort zu einer massiven Kunststoffüllung zusammen. Die übrigen Bauteile und Komponenten des Stators sind zu diesem Zeitpunkt noch nicht oder nur geringfügig erwärmt und nehmen deshalb an ihrer Oberfläche das Sintermaterial nicht an. Es ist sichergestellt, daß lediglich die empfindlichen Drahtwicklungen mit einer gesinterten Kunststoffüllung beschichtet werden, während der Kern des Stators frei von einer solchen Beschichtung und damit maßhaltig bleibt.

Die durch die Strombeaufschlagung entstehende Wärmeenergie hat in der optional erfolgenden anschließenden Ruhephase Gelegenheit, sich auf die weiteren Bauteile und Komponenten des Stators zumindest näherungsweise gleichmäßig zu verteilen. Auch nach Abschalten des Heizstromes erwärmt sich das Blechpaket des Kerns, Führungs- und Haltemittel der Drahtwicklungen oder dgl.. Im Tauchbad dringt das dünnflüssige Tauchmedium in sämtliche Spalte und haftet an allen freiliegenden Oberflächen. Die entstehende Tauchschicht bildet eine dünne, elektrisch isolierende Vollverkapselung des Stators, die auch Lunker- und andere Fehlstellen der Kunststoffüllung verschließt.

Das Kunststoffmaterial des Tauchbades ist bevorzugt ein ungefülltes, ungesättigtes Polyesterharz und kann derart dünnflüssig eingestellt werden, daß sich nach dem Abtropfen und Aushärten eine Dicke der Tauchschicht in einem Bereich von einschließlich 0,5 hundertstel mm bis 2 hundertstel mm ausbildet. Es hat sich gezeigt, daß die elektrische Isolationswirkung im genannten Schichtdickenbereich zu einer hohen Betriebssicherheit führt, ohne eine übermäßige Aufdickung der Bauteile zu bewirken. Stator und Rotor können mit geringen Spaltmaßen montiert werden. Die Vollverkapselung des Stators verhindert wirkungsvoll und zuverlässig eine Spannungsverschleppung durch oberflächenseitig anhaftendes Schleifmaterial. Die erforderlichen Luftspalte können konstruktiv auf ein für die Kühlung erforderliches Mindestmaß herabgesetzt werden, was zu einer kompakten Bauform bei gesteigerter Betriebssicherheit führt.

Zur Aufbringung des Kunststoffsintermaterials hat sich eine Erhitzung der Drahtwicklungen auf ca. 200°C als vorteilhaft herausgestellt, wobei die Ruhephase - optional mit leichtem Nachheizen bei etwa 20% des Statorheizstromes - bevorzugt derart bemessen ist, daß sich zu Beginn des Tauchvorganges eine Temperatur des Stators von etwa 100°C einstellt. Während des Sinterprozesses ist zunächst sichergestellt, daß sich das Sintermaterial ausschließlich an den Drahtwicklungen anlagert, während die weiteren Bauteile frei von einer Beschichtung bleiben. Nach der anschließenden Wärmeverteilung mit einem vergleichmäßigten Temperaturniveau von etwa 100°C ist eine gute Oberflächenhaftung des Kunststoffmaterials im Tauchbad zu beobachten.

Bevorzugt wird zur Herstellung der Tauchschicht ein Polyesterharz gewählt, welches bei Raumtemperatur im wesentlichen nicht aushärtet, und welches bei erhöhter Temperatur, insbesondere bei der Temperatur des Stators beim Eintauchen den Härtungsprozeß beginnt. Das bei Raumtemperatur vorgehaltene Tauchbad kann ohne Zeitlimit kontinuierlich unter Hinzufügung entsprechender Nachfüllmengen betrieben werden. Beim Eintauchen wird der chemische Härtungsprozeß des Polyesterharzes nur im unmittelbaren Oberflächenbereich des erwärmten Stators in Gang gesetzt, was einerseits eine verbesserte Haftungswirkung erzeugt, ohne andererseits den weiteren Inhalt des Tauchbades zu beeinträchtigen.

In bevorzugter Weiterbildung wird der Stator mit einer in einer Gewichtskraftrichtung liegenden Längsachse aus dem Tauchbad entnommen, wobei in dieser räumlichen Lage der Längsachse überschüssiger flüssiger Kunststoff abtropft. Insbesondere wird der Stator nach der Herausnahme aus dem Tauchbad in einer derartigen räumlichen Lage gehalten wird, daß Tropfen an bestimmten gewünschten Stellen entstehen, nachfolgend mit ausgehärtet anschließend entfernt werden.
Zweckmäßig erfolgt die anschließende Härtung der Tauchschicht mit in Gewichtskraftrichtung liegender Längsachse. Es ist dadurch sichergestellt, daß sich an der gesamten umfangsseitigen Innen- und Außenfläche des Stators eine gleichmäßig dünne Tauchschicht ausbildet, die auch bei dünnen Spaltmaßen eine leichte und fehlerfreie Montage ermöglicht. Unvermeidliche Tropfnasen können sich allenfalls an der unteren Stirnseite des Stators ausbilden, wo keine hohen Anforderungen an die Maßgenauigkeiten gestellt werden. Nach dem Aushärten können die Tropfen entfernt und insbesondere abgeschliffen oder -gefräst werden, ohne daß hohe Anforderungen an die Maßhaltigkeit zu stellen sind.

Freie elektrische Kontakte der Drahtwicklungen werden zweckmäßig zu Beginn des Beschichtungsverfahrens abgedeckt. Insbesondere können isolierte Kabelschuhe aufgesteckt werden, an denen der Stator für den Sinter- und Tauchvorgang aufgehängt werden kann. Der entsprechend hängend gehaltene Stator kann als Ganzes in das Sinter- und auch in das Tauchbad eingelassen werden, so daß eine vollflächige Beschichtung sichergestellt ist. Gleichzeitig bleiben die Anschlußkontakte blank und bedürfen für die spätere elektrische Kontaktierung keiner weiteren Nacharbeit. Der Stator wird vorteilhaft sowohl im Sinterbecken als auch im Tauchbad insbesondere um seine Längsachse schwenkend bewegt. Es entsteht eine Rührwirkung, die eine vollflächige Beschichtung auch in Hinterschneidungsbereichen und anderen schwer zugänglichen Stellen sicherstellt.

Ein Ausführungsbeispiel der Erfindung ist im folgenden anhand der Zeichnung näher beschrieben. Es zeigen:
- Fig. 1: eine Draufsicht eines erfindungsgemäßen Stators mit einem Kern und zwei auf den Kern aufgebrachten, elektrisch leitenden Drahtwicklungen;
- Fig. 2: eine Längsschnittdarstellung des Stators nach Fig. 1 mit Einzelheiten zu einer Sinter-Kunststoffüllung der Drahtwicklungen und einer vollflächigen, elektrisch isolierenden Tauchschicht aus Kunststoff;
- Fig. 3: eine schematische Phasendarstellung des Herstellungsprozesses mit einer Wirbelsinterkammer, einem Tauchbad und einer Temperkammer.

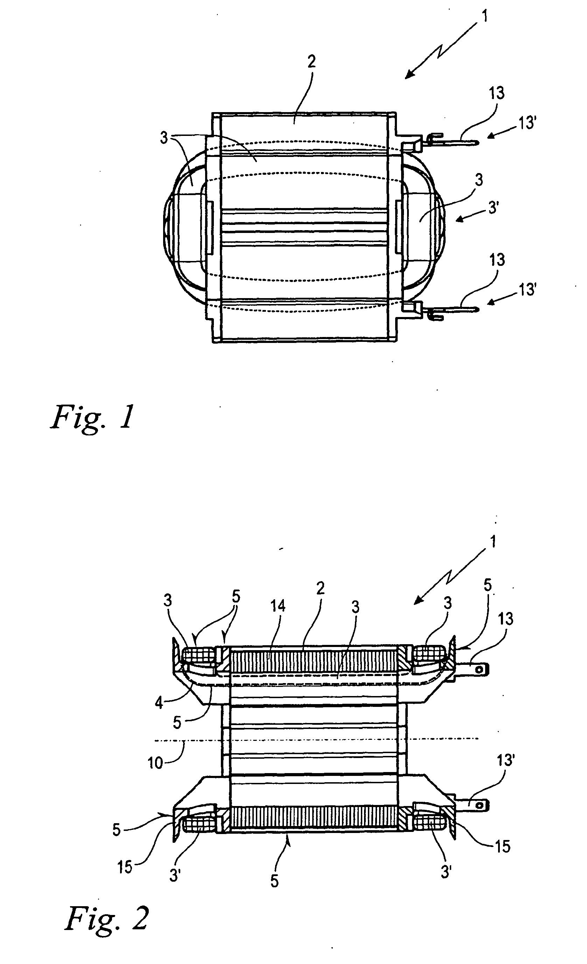

Fig. 1 zeigt in einer Draufsicht einen erfindungsgemäßen Stator 1 eines elektrischen Antriebsmotors einer handgeführten Werkzeugmaschine, wie eine Bohrmaschine, ein Winkelschleifer oder dgl.. Der Stator 1 umfaßt einen rohrförmigen Kern 2, der innenseitig zwei Drahtwicklungen 3, 3' trägt. In der Draufsicht nach Fig. 1 ist nur die obere Drahtwicklung 3 mit zwei zugehörigen elektrischen Kontakten 13 zu erkennen, die eine in dieser Draufsicht darunterliegende, in Fig. 2 dargestellte zweite Drahtwicklung 3' mit zugehörigen elektrischen Kontakten 13' abdeckt.

Einzelheiten des Stators 1 nach Fig. 1 sind in der Längsschnittdarstellung nach Fig. 2 zu erkennen, die gegenüber der Darstellung nach Fig. 1 um 90° bezüglich einer Längsachse 10 des Stators 1 gedreht gezeichnet ist. Demnach ist zu erkennen, daß symmetrisch zur Längsachse 10 je eine obere Drahtwicklung 3 und eine untere Drahtwicklung 3' mit zugehörigen elektrischen Kontakten 13, 13' angeordnet ist. Der rohrförmige Kern 2 besteht aus einem Paket von Kernblechen 14 aus Eisen, die quer zur Längsachse 10 angeordnet sind. An beiden Stirnseiten des Kerns 2 sind Drahtführungen 15 angeordnet, die die beiden Drahtwicklungen 3, 3' halten. Die Drahtwicklungen 3, 3' verlaufen innenseitig des rohrförmigen Kerns 2 achsparallel zur Längsachse 10. In den stirnseitigen Drahtführungen 15 verlaufen sie in Umfangsrichtung, woraus sich entsprechend der Darstellung nach Fig. 1 die Form einer geschlossenen Schlaufe ergibt.

Die Drahtwicklungen 3 sind insgesamt, also sowohl in ihrem stirnseitigen Umfangsabschnitt, als auch in ihrem innenseitig des Kerns 2 liegenden Längsabschnitt mit einer Kunststoffüllung 4 überzogen, die die Zwischenräume zwischen den einzelnen Litzen der Drahtwicklungen 3, 3' ausfüllt, und die auch eine außenseitige Beschichtung der Drahtwicklungen 3, 3' bildet. Der Stator 1 ist als gesamtes Bauteil einschließlich seines Kerns 2, der Drahtwicklungen 3, 3', der Kunststoffüllung 4 und der Drahtführungen 15 von einer dünnen, elektrisch isolierenden Tauchschicht 5 aus Kunststoff umhüllt. Im gezeigten Ausführungsbeispiel ist die Tauchschicht 5 aus einem ungefüllten, ungesättigten Polyesterharz gebildet und erzeugt eine elektrisch isolierende Vollverkapselung des Stators 1, von dem lediglich die elektrischen Anschlußkontakte 13, 13' nicht beschichtet bzw. blank sind.

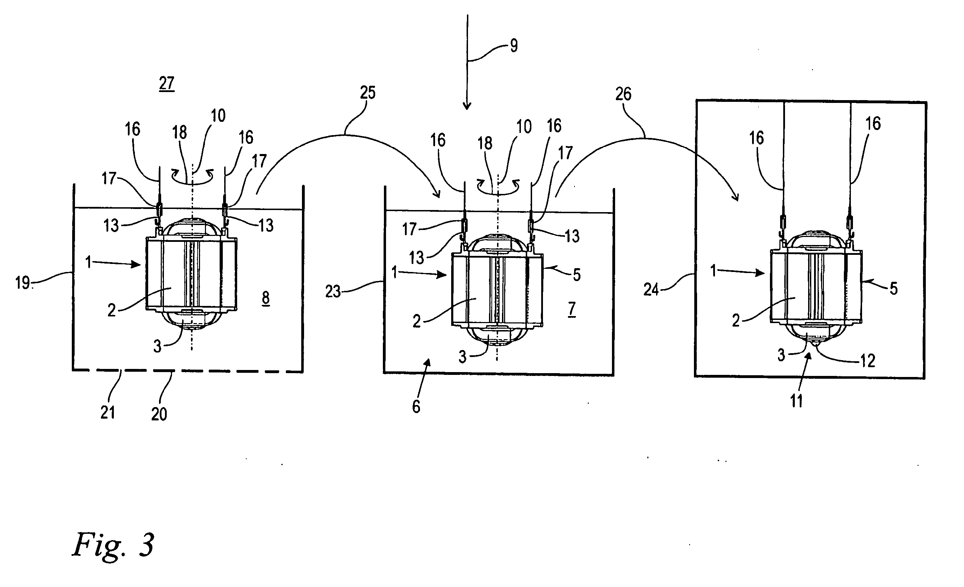

Das Verfahren zur Herstellung des Stators 1 nach den Fig. 1 und 2 ist in der Phasendarstellung nach Fig. 3 gezeigt. Auf die freien elektrischen Anschlußkontakte 13 sind Drähte 16 mittels elektrisch nach außen isolierter Kabelschuhe 17 aufgesteckt. Durch die Kabel 16 und die zugeordnete Drahtwicklung 3 wird ein elektrischer Strom geleitet, in dessen Folge sich die Drahtwicklung 3 aufheizt. Gleiches gilt für die hier nicht dargestellte, in Fig. 2 gezeigte Drahtwicklung 3'. Der Stator 1 ist an den Kabeln 16 hängend gehalten, wobei seine Längsachse 10 aufrecht, also in einer durch einen Pfeil 9 angegebenen Gewichtskraftrichtung liegt.

Die linke Seite der zeichnerischen Darstellung nach Fig. 3 zeigt die erste Phase des Verfahrens zur Herstellung des Stators 1, demnach dieser in einer nicht näher gezeigten Wirbelsinterkammer 27 gehalten ist. Die Wirbelsinterkammer 27 umfaßt einen angedeuteten Pulverbehälter 19 mit einem feinporig gelochten Behälterboden 20. Durch eine Vielzahl von feinporigen Öffnungen 21 im Behälterboden 20 wird Druckluft in die Wirbelsinterkammer eingeblasen. Im Pulverbehälter 19 befindet sich ein pulverförmiges Kunststoffsintermaterial 8, welches durch die eingeblasene Druckluft aufgewirbelt wird. Das pulverförmige Kunststoffsintermaterial 8 erhält durch die Aufwirbelung flüssigkeitsähnliche Eigenschaften. Als Kunststoffsintermaterial 8 ist beispielhaft ein mit Zusätzen versehenes Epoxydharzpulver gewählt, welches unter Einwirkung von Wärme zu einem festen Sinterkörper zusammenbackt.

Der Stator 1 ist an den Drähten 16 hängend vollständig in das aufgewirbelte Kunststoffsintermaterial 8 eingetaucht. Die zuvor beschriebene elektrische Aufheizung der Drahtwicklungen 3 kann im eingetauchten Zustand erfolgen und wurde im gezeigten Ausführungsbeispiel kurz vor dem Eintauchen in das Kunststoffsintermaterial 8 vorgenommen. Die Aufheizung der Drahtwicklungen 3 wurde auf eine Temperatur von etwa 200°C vorgenommen und ist zeitlich auf den Eintauchvorgang in den Pulverbehälter 19 derart abgestimmt, daß die Drahtwicklungen 3 die genannte Zieltemperatur erreicht haben, während die angrenzenden Bauteile des Stators 1, insbesondere der Kern 2 noch keine erhebliche Erwärmung durch die erhitzten Drahtwicklungen 3 erfahren haben.

Während des Tauchvorganges wird der Stator 1 um seine Längsachse 10 entsprechend einem Doppelpfeil 18 zyklisch geschwenkt. Das aufgewirbelte, pulverförmige Sintermaterial 8 umspült mit flüssigkeitsähnlichen Eigenschaften sämtliche freie Oberflächen des Stators 1 mit Ausnahme der freien elektrischen Kontakte 13, die durch die nach außen isolierten Kabelschuhe 17 abgedeckt sind. Die Wicklungstemperatur von 200°C und die Materialeigenschaften des Kunststoffsintermaterials sind derart aufeinander abgestimmt, daß das pulverförmige Kunststoffsintermaterial 8 an den erhitzten Drahtwicklungen 3 anhaftet und dort entsprechend der Darstellung nach Fig. 2 zu einer festen Kunststoffüllung 4 der Drahtwicklungen 3 zusammenbackt. Der langsam erfolgende Wärmeübergang von den Drahtwicklungen 3 auf den Kern 2 und weitere Teile des Stators 1 hat zu dem hier gezeigten Zeitpunkt des Wirbelsinterns noch zu keiner erheblichen Erwärmung der weiteren Statorbauteile geführt, so daß hier das Kunststoffsintermaterial 8 nicht anhaftet. Es ist sichergestellt, daß die Bildung der in Fig. 2 gezeigten Kunststoffüllung 4 ausschließlich an den Drahtwicklungen 3 anhaftet.

Nach Bildung der Kunststoffüllung 4 (Fig. 2) wird der Stator 1 an den Drähten 16 aus dem Pulverbehälter 19 und aus der Wirbelsinterkammer 27 herausgehoben und zur Ausführung eines nachfolgenden, zeichnerisch in der Mitte der Fig. 3 dargestellten Verfahrensschrittes entlang eines Pfeiles 25 zu einem Tauchbad 6 geführt.

Zwischen der Entnahme aus dem Pulverbehälter 19 und dem Eintauchen in das Tauchbad 6 erfolgt eine kurze Ruhephase, in der der Heizstrom der Drahtwicklungen 3 abgeschaltet oder reduziert sein kann. Die kurze Ruhephase ist zeitlich derart bemessen, daß sich die zuvor in den Drahtwicklungen 3 gebildete elektrische Widerstandswärme zumindest näherungsweise gleichmäßig auf die weiteren Bauteile und Komponenten des Stators 1 verteilt. Im gezeigten Ausführungsbeispiel ist die Ruhephase derart bemessen, daß sich zu Beginn des Tauchvorganges eine mittlere Temperatur des Stators 1 von etwa 100°C einstellt.

Zur Bildung des Tauchbades 6 ist ein Harzbehälter 23 vorgesehen, der einen dünnflüssigen Kunststoff 7 enthält. Der Kunststoff 7 ist im gezeigten Ausführungsbeispiel ein ungefülltes, ungesättigten Polyesterharz, welches bei Raumtemperatur im Harzbehälter 23 bevorratet ist und bei Raumtemperatur im wesentlichen nicht aushärtet. Bei Erreichen der Zieltemperatur des Stators 1 von etwa 100°C wird dieser mit seiner Längsachse 10 in Gewichtskraftrichtung 9 liegend an den Drähten 16 hängend in das Tauchbad 6 eingetaucht, so daß der Stator 1 vollständig vom flüssigen Kunststoff 7 umspült ist. Ebenso wie im Pulverbehälter 19 wird der Stator 1 im eingetauchten Zustand um seine Längsachse 10 in Richtung des Doppelpfeiles 18 schwenkend bewegt. An allen freiliegenden Oberflächen des Stators 1 bildet sich eine haftende Tauchschicht 5 aus dem flüssigen Kunststoff 7. Der flüssige Kunststoff 7 ist derart eingestellt, daß eine chemische Härtung bzw. Vernetzung des flüssigen Kunststoffs durch die Temperatur des Stators 1 in Gang gesetzt wird. Diese chemische Reaktion beginnt zunächst nur in unmittelbarer Oberflächennähe, während der weitere flüssige Kunststoff 7 im Tauchbad 6 im wesentlichen seine Raumtemperatur hält und keine chemische Reaktion erfährt. Die elektrischen Kontakte 13 sind weiterhin durch die Kabelschuhe 17 abgedeckt, so daß sich an ihnen keine Tauchschicht 5 ausbilden kann.

Nach dem Tauchvorgang im Harzbehälter 23 wird der Stator 1 mit seiner in der Gewichtskraftrichtung 9 liegenden Längsachse 10 aus dem Tauchbad 6 entnommen und entsprechend einem Pfeil 26 in eine Temperkammer 24 ohne Änderung der räumlichen Lage der Längsachse 10 überführt. Dabei und auch in der Temperkammer 24 tropft überschüssiger flüssiger Kunststoff 7 vom Stator 1 ab.

Rechts in der zeichnerischen Darstellung nach Fig. 3 ist als letztes Phasenbild der Stator 1 in der Temperkammer 24 gezeigt, wo er an den Drähten 16 aufgehängt gehalten ist. Im Innenraum der Temperkammer 24 herrscht eine geeignete Temperatur, bei der die zunächst noch flüssige Tauchschicht 5 aus dem Kunststoff 7 aushärtet. Auch die zu einem Sinterkörper zusammengebackene, aber zuvor noch nicht vollständig ausgehärtete Kunststoffüllung 4 (Fig. 2) härtet gleichzeitig mit aus. Die Härtung der Tauchschicht 5 erfolgt mit in Gewichtskraftrichtung 9 liegender Längsachse 10. Die Viskosität des noch nicht ausgehärteten Kunststoffs 7 ist derart eingestellt, daß sich nach dem Abtropfen eine Dicke der Tauchschicht 5 in einem Bereich von einschließlich 0,5 hundertstel mm bis einschließlich 2 hundertstel mm zumindest im Bereich des Kerns 2 einstellt. Die angestrebte Schichtdicke beträgt bevorzugt etwa 1 hunderstel mm im Bereich der umfangsseitigen inneren und äußeren Oberflächen des Kerns 2. Die räumliche Lage des Stators 1 nach der Entnahme aus dem Tauchbad 6 ist derart gewählt, daß evtl. sich bildende Tropfen 12 nicht an maßkritischen Stellen entstehen. Durch die beispielhaft hier gewählte vertikale Aufhängung können sich an der in Gewichtskraftrichtung 9 unten liegenden Stirnseite 11 des Stators 1 Tropfen 12 ausbilden, die gemeinsam mit der Tauchschicht 5 aushärten und nach dem Aushärten abgeschliffen bzw. abgefräst werden. Der Stator 1 ist dann insgesamt mit Ausnahme seiner elektrischen Anschlußkontakte 13 vollflächig von einer dünnen, elektrisch isolierenden Tauchschicht 5 aus Kunststoff umhüllt.

## Patentansprüche

1. Stator (1) eines elektrischen Antriebsmotors einer handgeführten Werkzeugmaschine, umfassend einen Kern (2) und auf den Kern (2) aufgebrachte, elektrisch leitende Drahtwicklungen (3), wobei die Drahtwicklungen (3) mit einer Kunststoffüllung (4) überzogen sind, **dadurch gekennzeichnet, daß** der Stator (1) insgesamt von einer dünnen, elektrisch isolierenden Tauchschicht (5) insbesondere aus Kunststoff umhüllt ist, wobei eine Dicke der Tauchschicht (5) in einem Bereich von einschließlich 0,5 hundertstel mm bis einschließlich 2 hundertstel mm vorgesehen ist.

2. Stator nach Anspruch 1,
**dadurch gekennzeichnet, daß** die Tauchschicht (5) aus einem ungefüllten, ungesättigten Polyesterharz gebildet ist.

3. Stator nach Anspruch 1 oder 2,
**dadurch gekennzeichnet, daß** die Kunststoffüllung (4) ein Kunststoffsintermaterial (8) ist.

4. Verfahren zur Herstellung eines Stators (1) eines elektrischen Antriebsmotors für eine handgeführte Werkzeugmaschine, wobei der Stator (1) einen Kern (2) und auf den Kern (2) aufgebrachte, elektrisch leitende Drahtwicklungen (3) umfaßt, wobei das Verfahren folgende Verfahrensschritte aufweist:
• durch die Drahtwicklungen (3) wird ein elektrischer Strom geleitet und damit die Drahtwicklungen (3) aufgeheizt;
• die erhitzten Drahtwicklungen (3) des Stators (1) werden mit einem Kunststoffsintermaterial (8) zur Herstellung einer Kunststoffüllung (4) beschichtet;
• anschließend wird der Stator (1) insgesamt in ein Tauchbad (6) mit flüssigem Kunststoff (7) getaucht, wobei sich nach der Entnahme aus dem Tauchbad (6) eine den Stator (1) insgesamt umhüllende Tauchschicht (5) bildet;
• nachfolgend wird der noch flüssige Kunststoff (7) der Tauchschicht (5) gehärtet.

5. Verfahren nach Anspruch 4,
**dadurch gekennzeichnet, daß** vor dem Eintauchen des Stators (1) in das Tauchbad (6) eine kurze Ruhephase erfolgt, die zeitlich derart bemessen ist, dass sich die Wärme der Drahtwicklungen (3) auf die weiteren Bauteile und Komponenten des Stators (1) zumindest näherungsweise gleichmäßig verteilt.

6. Verfahren nach Anspruch 4 oder 5,
**dadurch gekennzeichnet, daß** die Drahtwicklungen (3) zur Aufbringung des Kunststoffsintermaterials (8) auf ca. 200°C erhitzt werden.

7. Verfahren nach einem der Ansprüche 4 bis 6,
**dadurch gekennzeichnet, daß** das Kunststoffsintermaterial (8) im Wirbelsinterprozeß aufgebracht wird.

8. Verfahren nach einem der Ansprüche 4 bis 7,
**dadurch gekennzeichnet, daß** die Ruhephase derart bemessen ist, daß sich zu Beginn des Tauchvorganges eine Temperatur des Stators (1) von etwa 100°C einstellt.

9. Verfahren nach einem der Ansprüche 4 bis 8,
**dadurch gekennzeichnet, daß** eine Herstellung der Tauchschicht (5) mit einem flüssigen Kunststoff insbesondere aus ungefülltem, ungesättigten Polyesterharz erfolgt, welches bei Raumtemperatur im wesentlichen nicht aushärtet, und welches bei erhöhter Temperatur, insbesondere bei der Temperatur des Stators (1) beim Eintauchen den Härtungsprozeß beginnt.

10. Verfahren nach einem der Ansprüche 4 bis 9,
**dadurch gekennzeichnet, daß** der Stator (1) mit einer in einer Gewichtskraftrichtung (9) liegenden Längsachse (10) aus dem Tauchbad (6) entnommen wird, wobei in dieser räumlichen Lage der Längsachse (10) überschüssiger flüssiger Kunststoff (7) abtropft.

11. Verfahren nach einem der Ansprüche 4 bis 10,
**dadurch gekennzeichnet, daß** der Stator (1) nach der Herausnahme aus dem Tauchbad (6) in einer derartigen räumlichen Lage gehalten wird, daß Tropfen (12) an bestimmten gewünschten Stellen entstehen, nachfolgend mit ausgehärtet anschließend entfernt werden.

12. Verfahren nach Anspruch 11,
**dadurch gekennzeichnet, daß** die Härtung der Tauchschicht (5) mit in Gewichtskraftrichtung (9) liegender Längsachse (10) erfolgt.

13. Verfahren nach einem der Ansprüche 4 bis 12,
**dadurch gekennzeichnet, daß** freie elektrische Kontakte (13) des Stators (1) zu Beginn des Beschichtungsverfahrens abgedeckt werden.

14. Verfahren nach einem der Ansprüche 4 bis 13,
**dadurch gekennzeichnet, daß** der Stator (1) im Tauchbad (6) insbesondere um seine Längsachse (10) schwenkend bewegt wird.

## Claims

1. Stator (1) of an electric derive motor of a manually operated machine tool, comprising a core (2) and electrically conducting wire windings (3) formed on the core (2), the said windings (3) being covered by a plastic filling (4),
**characterised in that** the stator (1) as a whole is enveloped by a thin, electrically insulating immersion coating (5), in particular of plastic, the thickness of the said immersion coating (5) being in the range from 0.5 hundredths of a mm to 2 hundredths of a mm, inclusive.

2. Stator according to Claim 1,
**characterised in that** the immersion coating (5) consists of an unfilled, unsaturated polyester resin.

3. Stator according to Claims 1 or 2,
**characterised in that** the plastic filling (4) is a plastic sintering material (8).

4. Method for producing a stator (1) of an electric drive motor for a manually operated machine tool, the stator (1) comprising a core (2) with electrically conducting wire windings (3) formed on the core (2), the said method comprising the following process steps:
• an electric current is passed through the windings (3) so that the windings (3) are heated;
• the heated windings (3) of the stator (1) are covered with a plastic sintering material (8) to produce a plastic filling (4);
• the stator (1) as a whole is then immersed in an immersion bath (6) of liquid plastic (7) so that after its removal from the immersion bath (6) an immersion coating (5) that envelops the entire stator (1) is formed;
• and the still liquid plastic (7) of the immersion coating (5) is the hardened.

5. Method according to Claim 4,
**characterised in that** before the stator (1) is immersed in the immersion bath (6) a short rest phase is allowed, of length calculated to enable the heat from the windings (3) to spread at least approximately uniformly to the other components and parts of the stator (1).

6. Method according to Claims 4 or 5,
**characterised in that** to enable application of the plastic sintering material (8) the wire windings (3) are heated to around 200°C.

7. Method according to any of Claims 4 to 6,
**characterised in that** the plastic sintering material (8) is applied by a cyclonic sintering process.

8. Method according to any of Claims 4 to 7,
**characterised in that** the length of the rest phase is such that at the beginning of the immersion process the temperature of the stator (1) is around 100°C.

9. Method according to any of Claims 4 to 8,
**characterised in that** the immersion coating (5) is produced with a liquid plastic, in particular an unfilled, unsaturated polyester resin, which does not substantially harden at room temperature and which, at an elevated temperature and in particular at the temperature of the stator (1), begins the hardening process when the stator is immersed.

10. Method according to any of Claims 4 to 9,
**characterised in that** the stator (1) is removed from the immersion bath (6) with its longitudinal axis (10) orientated along the direction of the force of gravity (9), so that in this spatial orientation of the longitudinal axis (10) excess liquid plastic (7) drains away.

11. Method according to any of Claims 4 to 10,
**characterised in that** after being removed from the immersion bath (6) the stator (1) is held in a position such that drops (12) are formed at certain desired points, which are then removed after hardening.

12. Method according to Claim 11,
**characterised in that** the hardening of the immersion coating (5) takes place with a longitudinal axis (10) orientated along the direction (9) of the force of gravity.

13. Method according to any of Claims 4 to 12,
**characterised in that** the free electrical contacts (13) of the stator (1) are masked at the beginning of the coating process.

14. Method according to any of Claims 4 to 13,
**characterised in that** in the immersion bath (6) the stator (1) is slued about, in particular about its longitudinal axis (10).

## Revendications

1. Stator (1) d'un moteur électrique d'une machine-outil portative, comprenant un noyau (2) et des enroulements métalliques (3) conducteurs d'électricité qui sont posés sur le noyau (2), les enroulements (3) étant recouverts d'un remplissage en matière plastique (4),
**caractérisé en ce que** le stator (1) est enveloppé dans son ensemble par une mince couche obtenue par immersion (5) isolante électriquement, en particulier en matière plastique, une épaisseur de la couche (5) étant prévue dans une plage qui va de 0,5 centième de mm inclus à 2 centièmes de mm inclus.

2. Stator selon la revendication 1, **caractérisé en ce que** la couche obtenue par immersion (5) est formée à partir d'une résine polyester non saturée et sans charge.

3. Stator selon la revendication 1 ou 2, **caractérisé en ce que** le remplissage en matière plastique (4) est constitué par une matière plastique frittée (8).

4. Procédé pour fabriquer un stator (1) d'un moteur électrique pour une machine-outil portative, le stator (1) comprenant un noyau (2) et des enroulements métalliques (3) conducteurs d'électricité qui sont posés sur le noyau (2), le procédé comportant les étapes suivantes :
- un courant électrique passe dans les enroulements métalliques (3) et les chauffe ainsi ;
- les enroulements (3) chauffés du stator (1) sont recouverts d'une matière plastique frittée (8) en vue de la fabrication d'un remplissage en matière plastique (4) ;
- puis le stator (1) est plongé dans son ensemble dans un bain (6) de matière plastique liquide (7), moyennant quoi une couche (5) qui enveloppe l'ensemble du stator (1) se forme après la sortie du bain (6) ;
- la matière plastique encore liquide (7) de la couche obtenue par immersion (5) est ensuite durcie.

5. Procédé selon la revendication 4, **caractérisé en ce qu'**avant l'immersion du stator (1) dans le bain (6), il y a une courte phase de repos qui est calculée dans le temps pour que la chaleur des enroulements métalliques (3) se répartisse de manière au moins approximativement uniforme sur les autres pièces et composants du stator (1).

6. Procédé selon la revendication 4 ou 5, **caractérisé en ce que** les enroulements métalliques (3) sont chauffés à environ 200°C en vue de l'application de la matière plastique frittée (8).

7. Procédé selon l'une des revendications 4 à 6, **caractérisé en ce que** la matière plastique frittée (8) est appliquée par enduction en lit fluide.

8. Procédé selon l'une des revendications 4 à 7, **caractérisé en ce que** la phase de repos est calculée pour qu'une température du stator (1) d'environ 100°C apparaisse au début de l'immersion.

9. Procédé selon l'une des revendications 4 à 8, **caractérisé en ce qu'**une fabrication de la couche obtenue par immersion (5) se fait avec une matière plastique liquide composée en particulier de résine polyester non saturée et sans charge qui ne durcit quasiment pas à température ambiante et qui commence à durcir à une température plus élevée, en particulier à la température du stator (1), lors de l'immersion.

10. Procédé selon l'une des revendications 4 à 9, **caractérisé en ce que** le stator (1) est retiré du bain (6) avec un axe longitudinal (10) situé dans le sens de la gravité (9), étant précisé que dans cette position spatiale de l'axe longitudinal (10), l'excédent de matière plastique liquide (7) s'égoutte.

11. Procédé selon l'une des revendications 4 à 10, **caractérisé en ce que** le stator (1), après avoir été sorti du bain (6), est maintenu dans une position spatiale qui est telle que des gouttes (12) se forment à des endroits souhaités définis, sont ensuite durcies avec le reste puis sont éliminées.

12. Procédé selon la revendication 11, **caractérisé en ce que** le durcissement de la couche obtenue par immersion (5) se fait avec un axe longitudinal (10) situé dans le sens de la gravité (9).

13. Procédé selon l'une des revendications 4 à 12, **caractérisé en ce que** des contacts électriques dégagés (13) du stator (1) sont couverts au début de l'opération d'enduction.

14. Procédé selon l'une des revendications 4 à 13, **caractérisé en ce que** le stator (1) est soumis dans le bain (6) à un mouvement de pivotement en particulier autour de son axe longitudinal (10).
